# EUROPÄISCHE PATENTSCHRIFT

(11) **EP 3 020 455 B1**
(45) Veröffentlichungstag und Bekanntmachung des Hinweises auf die Patenterteilung: **13.09.2017**
(21) Anmeldenummer: 15176361.2
(22) Anmeldetag: 10.07.2015
(51) Int. Cl.: A63B 24/00, A63B 23/12, A63B 23/02, A63B 71/06, A63B 21/008, A63B 22/00, A63B 23/035, A63B 21/005, A63B 21/00

(54) **GERÄT ZUM AUSFÜHREN VON BEWEGUNGEN DURCH SCHWERPUNKTVERLAGERUNG UND/ODER MUSKELBETÄTIGUNG EINES MENSCHLICHEN KÖRPERS**
DEVICE FOR PERFORMING MOVEMENTS BY MOVING THE CENTRE OF GRAVITY AND/OR MUSCLE ACTUATION OF A HUMAN BODY
APPAREIL DESTINE A EXECUTER DES MOUVEMENTS PAR LE DEPLACEMENT DU POINT DE GRAVITE ET/OU D'ACTIVITE MUSCULAIRE D'UN CORPS HUMAIN

(30) Priorität: 17.11.2014 DE 102014223446
(43) Veröffentlichungstag der Anmeldung: 18.05.2016
(73) Patentinhaber: HYVE AG, 80799 München (DE)
(72) Erfinder: SCHOLL, Johannes, 80686 München (DE); SCHMIDT-GABRIEL, Michael, 82234 Wessling (DE)
(74) Vertreter: Prüfer & Partner mbB Patentanwälte · Rechtsanwälte

(56) Entgegenhaltungen:
- WO-A1-2010/036275
- WO-A2-03/033920
- WO-A2-2005/004082
- CN-A- 1 411 879
- FR-A1- 2 852 526
- GB-A- 2 510 136
- JP-A- 2009 131 647
- US-A- 5 830 158
- US-A- 6 012 926
- US-A1- 2010 022 354
- US-A1- 2011 270 135

## Beschreibung

Die Erfindung betrifft ein Gerät zum Ausführen von Bewegungen durch Schwerpunktverlagerung und/oder Muskelbetätigung eines menschlichen Körpers.

Aus der Sportgeräteentwicklung sind Trainingsgeräte zum Einsatz in Fitnessstudios bekannt, wie beispielsweise Laufbänder, Stepper oder Fahrradergometer. Auf diesen sitzt bzw. steht ein Anwender und führt vorgegebene Bewegungen aus. Dabei sollen durch die körperliche Betätigung Kalorien verbrannt, ein Trainingseffekt erzielt, sowie Spaß für den Benutzer generiert werden.

Des Weiteren sind Spielekonsolen wie eine Microsoft Wii^{®} oder eine Sony PlayStation Move^{®} bekannt, bei welchen der Benutzer körperliche Bewegungen ausführt, die durch einen Sensor erfasst werden, wodurch ein Spielegeschehen auf einem TV-Bildschirm beeinflusst bzw. gesteuert werden kann.

Des Weiteren sind 3D-Kinos bekannt, in welchen Filme mit dreidimensionalem Effekt gezeigt werden, um dem Besucher ein möglichst realitätsnahes Filmerlebnis anbieten zu können. Durch einen 3D-Effekt bei Filmen soll zum einen der Spaß beim Zuschauen erhöht werden, des Weiteren soll die Handlung auf der Leinwand realer wirken und den Kinobesucher vergessen lassen, dass er sich in einer Kinovorführung befindet. Er soll von seinem Empfinden her möglichst selbst Teil des Geschehens werden.

Des Weiteren sind Simulatoren bekannt, in welchen ein Benutzer beispielsweise ein Formel 1-Auto oder ein Rennmotorrad steuert, wobei dem Benutzer anstatt einer realen Windschutzscheibe ein System aus Computermonitoren zur Verfügung steht. Des Weiteren kann ein realitätsnahes Fahrerlebnis dadurch erhöht werden, dass der Benutzer in einem realitätsgetreuen nachgebildeten Fahrzeugcockpit Platz nimmt und sich die Bedienelemente nur unwesentlich von denen eines realen Fahrzeugs unterscheiden.

Des Weiteren sind Videobrillen bekannt, die auf dem Kopf eines Benutzers angeordnet und fixiert werden. Auf solch einer Videobrille kann visuell eine virtuelle Realität ausgegeben werden, wobei sich ein Anwender während der Benutzung eines solchen Gerätes so fühlt, als könne er sich in der virtuellen Realität umsehen und sich in dieser frei bewegen. Wenn der Benutzer seinen Kopf dreht, und damit auch die Videobrille, empfängt ein stationär angeordnetes Empfängersystem die gemeinsame Bewegung von Kopf und Brille und leitet Bewegungsrichtung und Bewegungsgeschwindigkeit an eine Recheneinheit weiter, die das mittels der Videobrille angezeigte Videobild entsprechend berechnet, so dass für einen Anwender der Eindruck entsteht, als könne er sich wirklich im virtuellen Raum bewegen.

Des Weiteren sind Flugsimulatoren zur Pilotenausbildung bekannt, welche zum einen ein originalgetreues Cockpit nachbilden, zum andern aber auch die tatsächlichen Bewegungen und Beschleunigungen, die während des Fluges, beim Start und bei der Landung auf ein reales Cockpit wirken, simulieren. Dies geschieht beispielsweise dadurch, dass das Cockpit auf einer Bewegungsplattform, wie beispielsweise einem Tripod angeordnet ist, und das Cockpit durch die Bewegungsplattform in verschiedene Richtungen bewegt, gekippt und beschleunigt werden kann.

Aus dem Stand der Technik sind außerdem Trainingsgeräte bekannt, wie beispielsweise in dem Dokument GB 2 510 136 A offenbart.

Des Weiteren ist aus dem Stand der Technik ein in US 5 830 158 A offenbartes Diagnosegerät bekannt.

Es ist Aufgabe der vorliegenden Erfindung, ein Gerät zum Ausführen von Bewegungen durch Schwerpunktverlagerung und/oder Muskelbetätigung eines menschlichen Körpers anzubieten, wobei ein Benutzer durch die Bewegung seines Hüftbereichs, während sich der Benutzer auf dem Gerät abstützt, eine Schwerpunktverlagerung generiert, und das Geräte inklusive seinem eigenen Körper in verschiedene Richtungen neigen kann. Dabei ist es des Weiteren denkbar, dass der Benutzer während dessen eine Videobrille trägt und sich durch das Gesamtsystem von Videobrille und besagtem Bewegungsgerät in einer virtuellen Umgebung bewegen kann sowie mit dieser interagiert. Dabei können die vom Benutzer verursachten Bewegungen alleine durch die Schwerkraft mittels Schwerpunktverlagerung generiert werden. Zudem ist es auch denkbar, dass die Bewegungen des Geräts durch am Gerät angeordnete Motoren oder Dämpfer beeinflusst werden. Es ist des Weiteren denkbar, ein Gesamtsystem aus dem Gerät und einer Vorrichtung zur visuellen Ausgabe von bewegten Bildern vorzusehen, wobei der Benutzer auf dem Gerät wenigstens teilweise von der Ausgabevorrichtung umschlossen wird. Die Ausgabevorrichtung könnte dabei halbkreisförmig ausgeführt sein, wobei sich der-Kopf des Benutzers inkl. dem vorderen Teil des Geräts innerhalb der Ausgabevorrichtung befindet. Durch eine visuelle Ausgabe von beispielsweise einer Simulatoranwendung auf der Innenseite der Vorrichtung könnte dadurch ein realitätsnaher Eindruck des Benutzers während einer Simulatoranwendung bewirkt werden. Dabei müsste die Ausgabevorrichtung so dimensioniert sein, dass sich der Benutzer auf dem Gerät frei bewegen kann, ohne an die Ausgabevorrichtung anzustoßen. Des Weiteren könnten durch die Ausgabevorrichtung sowie auf einer Videobrille dreidimensionale Bilder wiedergegeben werden.

Diese Aufgabe wird mit einem Gerät, einem System, sowie einem Verfahren gemäß den unabhängigen Ansprüchen gelöst.

Vorteilhafte Weiterbildungen sind Gegenstand der Unteransprüche.

Durch die freie Bewegbarkeit des Hüftbereiches eines Anwenders kann gewährleistet werden, dass dieser seinen Schwerpunkt bzw. den Gesamtschwerpunkt des beweglichen Teils des Gerätes sowie seines eigenen Körpers so verlagern kann, dass diese Schwerpunktsverlagerung zu einer Bewegung des Gerätes aufgrund von Schwerkraft führt, wodurch ein besonders angenehmes Benutzungsverhalten resultiert. Denn das Gerät reagiert dadurch besonders schnell auf Wünsche zur Bewegungsänderung, und nach einer kurzen Eingewöhnungszeit ist es einem Benutzer möglich, das Gerät intuitiv und dosiert zu bedienen bzw. zu bewegen.

Durch die konvexe Krümmung der Außenfläche des Basisabschnitts wird dem Gerät eine Bewegungsmöglichkeit bereitgestellt, ohne hierfür eine komplexe und teure Kinematikvorrichtung vorsehen zu müssen.

Vorteilhafterweise ist die Krümmung der konvexen Fläche des Basisabschnitts variabel, wodurch das Bewegungsverhalten des Geräts vor der Herstellung, also während der Auslegung/Konstruktion, nach Belieben festlegbar ist. Durch eine variable Krümmung wird vorteilhafterweise dadurch ein aufrichtendes Moment erzeugt, dass die Krümmung der Aufstandsfläche im mittleren Bereich (der Bereich, der mit dem Boden während einer nicht ausgelenkten Position des Geräts, also in einer Ruheposition, in Kontakt steht) des Basisabschnitts gering ist, und nach außen hin stärker wird. In einem weiteren Ausführungsbeispiel ist die Krümmung der Aufstandsfläche im mittleren Bereich des Basisabschnitts vorteilhafterweise stärker, und nimmt nach außen hin ab. Dadurch wird eine Art Endanschlag erzeugt, da sich das Gerät im Bereich der abnehmenden Krümmung nur noch mit großem Kraftaufwand weiter kippen lässt.

Vorteilhafterweise liegt der gemeinsame Schwerpunkt von dem Körper des Benutzers und dem Gerät knapp unter der Längs- und Querachse. Dadurch befindet sich das bewegliche System aus Mensch und Gerät in einem stabilen Zustand. Dass der Schwerpunkt unterhalb von Längs- und Querachse angeordnet ist, bedeutet, dass der Schwerpunkt in vertikaler Richtung unter den Achsen liegt. Vorteilhafterweise ist es dem Benutzer möglich, seinen Körperschwerpunkt durch eine Bewegung des Hüftbereichs so anzuordnen, dass daraus eine Auslenkung des Geräts resultiert bzw. verursacht wird. Außerdem entsteht für den Benutzer aufgrund der freien Beweglichkeit seines Hüftbereichs bzw. seines Körperschwerpunkts der Eindruck, als würde er schweben.

Vorteilhafterweise sind die Auflagen für Arme und Beine, sowie die Griffe relativ zueinander starr vorgesehen. Durch eine solche Anordnung ist es für einen Benutzer besonders einfach und präzise möglich, seinen Schwerpunkt so zu verlagern, wie es für eine aktuelle Anwendung nötig ist. Durch solch eine Anordnung ist es dem Benutzer des Weiteren möglich, seinen Hüftbereich frei zu bewegen, um möglichst einfach eine Schwerpunktverlagerung ausführen zu können.

Vorteilhafterweise weist das Gerät ein Versteifungselement auf, das aus dem ansonsten "geöffneten Profil", bestehend aus Armauflagen, Beinauflagen, und Basisabschnitt, ein "geschlossenes Profil" erzeugt, welches eine deutlich gesteigerte Steifigkeit aufweist.

Vorteilhafterweise weist das Gerät zwei Griffelemente auf, welche jeweils von einer Hand des Benutzers umgriffen werden können, so dass sich der Benutzer einfach in seiner Lage sichern bzw. festhalten kann.

Vorteilhafterweise ist das Gerät aus Kunststoff hergestellt, wodurch das Gerät vorteilhafterweise in einem Spritzgussverfahren kostengünstig und in hohen Stückzahlen herstellbar ist. Des Weiteren ist das Gerät auf Grund des Kunststoffmaterials einfach und schnell zu reinigen, und somit auf einfache Art und Weise hygienisch zu halten.

Vorteilhafterweise weist das Gerät eine Erfassungsvorrichtung zum Erfassen der aktuellen Position des Gerätes auf, sowie eine Übertragungsvorrichtung zum Übertragen der Positionsdaten. Durch eine solche Ausführungsform ergeben sich vielfältige Anwendungsmöglichkeiten der Erfindung. Durch eine Erfassung der Positionsdaten ist es möglich, diese an eine Recheneinheit weiterzugeben, wodurch Anwendungen zur Simulation von virtuellen Realitäten realisiert werden können. Beispielsweise ist es dadurch möglich, in einem Computerspiel oder einer Simulatoranwendung die Bewegungen des Gerätes zum Steuern von Funktionen zu verwenden. Zum Steuern eines Flugzeuges während einer Flugsimulatoranwendung wäre es beispielsweise denkbar, dass ein Benutzer des Gerätes durch Schwerpunktverlagerung sich selbst und das Gerät um eine Längsachse dreht, um dadurch das Flugzeug im Flugsimulator ebenfalls um seine Längsachse drehen zu lassen. Um das Flugzeug außerdem um seine Querachse zu steuern, könnte ein Benutzer sich selbst und das Gerät ebenfalls um eine Querachse drehen bzw. eine solche Drehung verursachen, idealerweise durch Verlagerung seines Körperschwerpunkts.

Anhand der nachfolgend beigefügten Zeichnungen werden zwei Ausführungsbeispiele der Erfindung erläutert.

Es wird gezeigt:
- Fig. 1:: ein erstes Ausführungsbeispiel der Erfindung in perspektivischer Ansicht.
- Fig. 2:: ein erstes Ausführungsbeispiel der Erfindung mit Ansicht von vorne.
- Fig. 3:: ein erstes Ausführungsbeispiel der Erfindung mit der Ansicht von links.
- Fig. 4:: ein erstes Ausführungsbeispiel der Erfindung mit der Ansicht von oben.
- Fig. 5:: ein zweites Ausführungsbeispiel der Erfindung in perspektivischer Ansicht.
- Fig. 6:: ein zweites Ausführungsbeispiel der Erfindung mit Ansicht von vorne.
- Fig. 7:: ein zweites Ausführungsbeispiel der Erfindung mit der Ansicht von links.
- Fig. 8:: ein zweites Ausführungsbeispiel der Erfindung mit der Ansicht von oben.

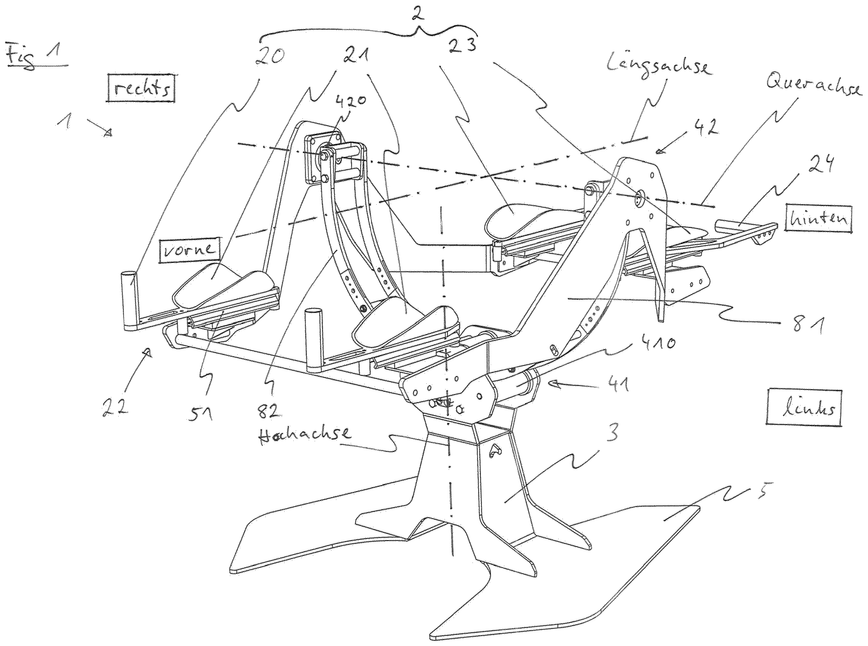

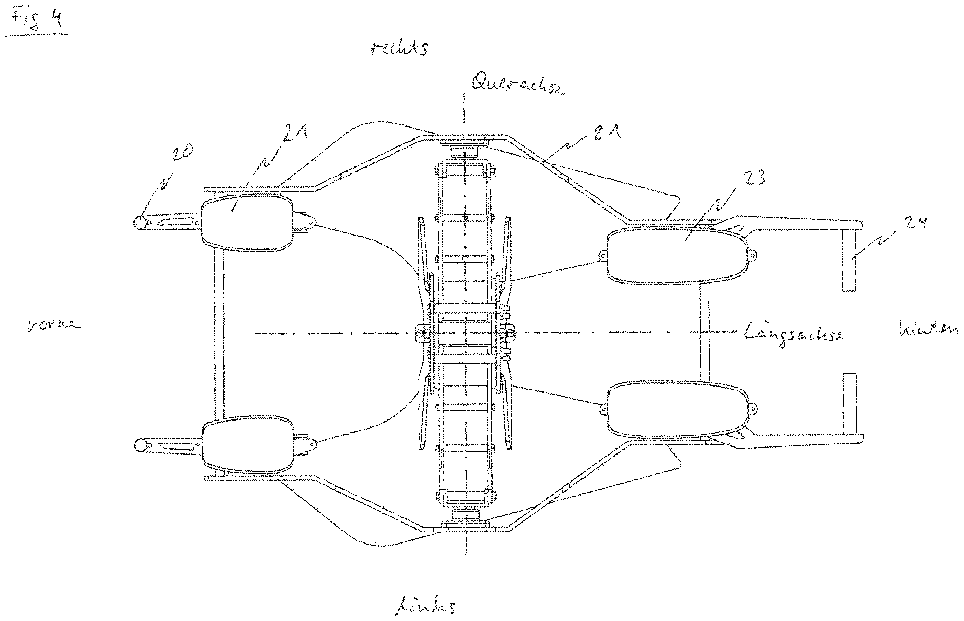

Fig. 1 zeigt eine perspektivische Ansicht eines ersten Ausführungsbeispiels des Geräts 1 zum Ausführen von Bewegungen durch Schwerpunktverlagerung und/oder Muskelbetätigung eines menschlichen Körpers. Es wird eine Längsachse gezeigt, welche in Längsrichtung des Geräts verläuft. Es wird eine Querachse gezeigt, welche in Querrichtung des Geräts verläuft. Und es wird eine Hochachse gezeigt, welche in vertikaler Richtung verläuft. Die Hochachse kann vertikal verlaufen, wie im vorliegenden Ausführungsbeispiel gezeigt, oder aber auch nach vorne bzw. hinten geneigt sein. Die Richtungs- und Positionsangaben vorne, hinten, links und rechts sind ebenfalls in Fig. 1 eingezeichnet, und werden zusätzlich in der Draufsicht in Fig. 4 eindeutig gezeigt. Die in der Fig. 1 gezeigte Ausführungsform weist eine Grundplatte 5 und eine Basis 3 auf, durch welche das gesamte Gerät 1 auf dem Boden aufliegt. Die Auflagevorrichtung 2 weist Griffelemente 20, Armschalen 21 sowie Beinschalen 23 auf. Durch die Auflagevorrichtung 2 wird der Körper eines Benutzers auf der Vorrichtung abgestützt. Die einzelnen Teile der Auflagevorrichtung sind an ein Rahmenelement 81 angebunden. Die Armschale 21 auf der rechten Seite des Geräts bildet mit dem Griffelement 20 auf der rechten Seite des Geräts eine Einheit, analog dazu bildet das Griffelement 20 auf der linken Seite eine Einheit mit der Armschale 21 auf der linken Seite des Geräts 1. Das Griffelement 20 und die Armschale 21, welche jeweils eine Einheit bilden, sind in dieser Ausführungsform fest miteinander verbunden. Jede Einheit ist durch ein Schienenelement 51 mit dem Rahmenelement 81 verbunden, wodurch sich die jeweiligen Einheiten in festgelegten Grenzen in Längsrichtung des Geräts 1 verschieben können. Die einzelnen Elemente der Auflagevorrichtung 2 können zusammen mit dem Rahmenelement 81 um die Querachse des Geräts 1 gekippt werden. Diese Kippfunktionalität wird durch eine Anordnung 420 aus Welle und Lager ermöglicht, welche die die Auflagevorrichtung 2 aufnehmende Tragstruktur (Rahmenelement 81) mit einem bogenförmigen weiteren Tragelement (Bogenelement 82) verbindet. Dieses weitere Bogenelement 82 wird durch eine Rollenauflage 41 gestützt und durch diese geführt, so dass sich die Auflagevorrichtung 2 zusammen mit dem Rahmenelement 81 und dem Bogenelement 82 um die Längsachse des Geräts drehen kann. Die Rollenführung 41 weist eine bogenförmige Anordnung von Rollenelementen 410 auf, auf welchen die Komponenten Auflagevorrichtung 2, Rahmenelement 81 und Bogenelement 82 gelagert werden, wobei zusätzlich wenigstens eine Rolle in vertikaler Richtung über dem Bogenelement 82 angeordnet ist, um diese Komponenten auch in einer vertikalen Richtung zu sichern. Die Komponenten Auflagevorrichtung 2, Rahmenelement 81 und Bogenelement 82 werden als der bewegliche Teil des Geräts bezeichnet. Am hinteren Ende der Auflagevorrichtung 2 sind des Weiteren Strebenelemente 24 angeordnet, durch welche sich ein Benutzer mit den Fußsohlen abstützen kann. Die Hochachse des Geräts 1 ist in dieser Ausführunsform vertikal angeordnet. Es wäre allerdings auch denkbar, dass die Hochachse nach vorne oder hinten geneigt ist. Des Weiteren erstreckt sich die Längsachse in dieser Ausführungsform horizontal. Es wäre auch denkbar, dass die Längsachse nach unten oder oben gekippt ist. Die Querachse ist in diesem Ausführungsbeispiel bezüglich des Rahmenelements 81 fix angeordnet. Falls das Rahmenelement 81 um die Längsachse gekippt wird, kippt demnach auch die Querachse des Geräts. Falls der bewegliche Teil des Geräts 1 bereits um die Längsachse gekippt ist, erfolgt ein weiteres Verkippen der Auflagevorrichtung 2 zusammen mit dem Rahmenelement 81 deshalb um die ebenfalls gekippte Querachse.

Das bogenförmige Tragelement bzw. das Bogenelement 82 muss nicht zwingend bogenförmig ausgeführt sein. Dieses Tragelement kann in einer anderen Ausführungsform beispielsweise in seiner Form einer beliebigen Kurvenfunktion folgen. Es wäre des Weiteren außerdem denkbar, das Tragelement als geschlossenen Kreis auszuführen. Bei einer solchen Ausführungsform könnte es für den Benutzer möglich sein, mit dem Gerät eine volle Rotation um die Längsachse zu vollziehen.

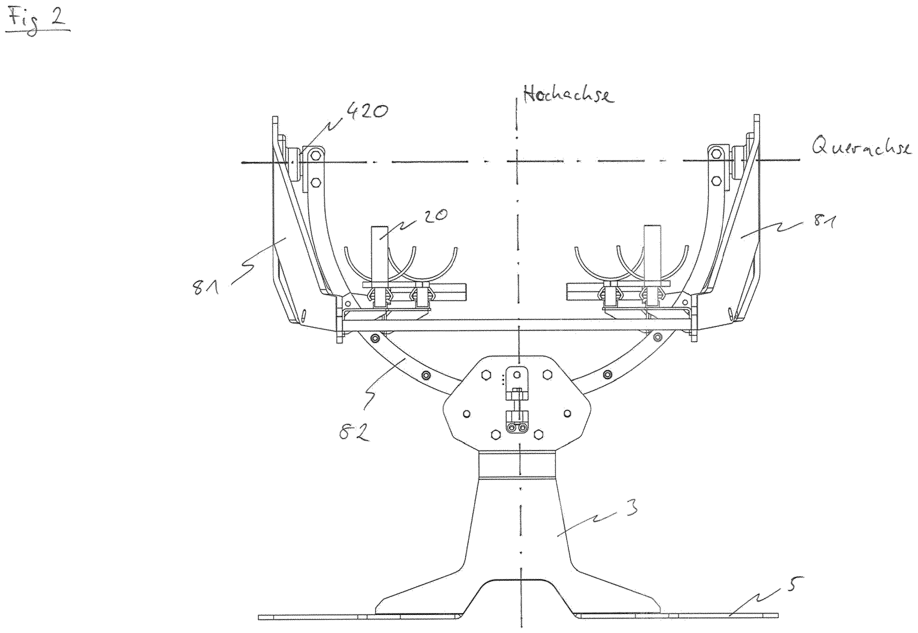

Fig. 2 zeigt eine Vorderansicht des ersten Ausführungsbeispiels eines Geräts 1 zum Ausführen von Bewegungen durch Schwerpunktverlagerung und/oder Muskelbetätigung eines menschlichen Körpers, wobei die Hochachse des Geräts in vertikaler Richtung und die Querachse des Geräts in horizontaler Richtung verläuft. In dieser Ansicht ist gut zu erkennen, dass das Rahmenelement 81 zwei Teile aufweist, welche auf der rechten und linken Seite der Abbildung angeordnet sind. Die einzelnen Teile des Geräts 1 können aus verschiedenen Materialien hergestellt werden. Beispielsweise aus kohlefaserverstärktem Kunststoff, herkömlichem Kunstoff oder Metall. In einer bevorzugten Ausführungsform ist die gesamte Konstruktion des Geräts möglichst leicht ausgeführt. Durch eine geringe Masse, insbesondere der beweglichen Teile des Geräts, kann der Bedienkomfort für den Benutzer erhöht werden, da ein Verkippen einfacher herbeigeführt werden kann.

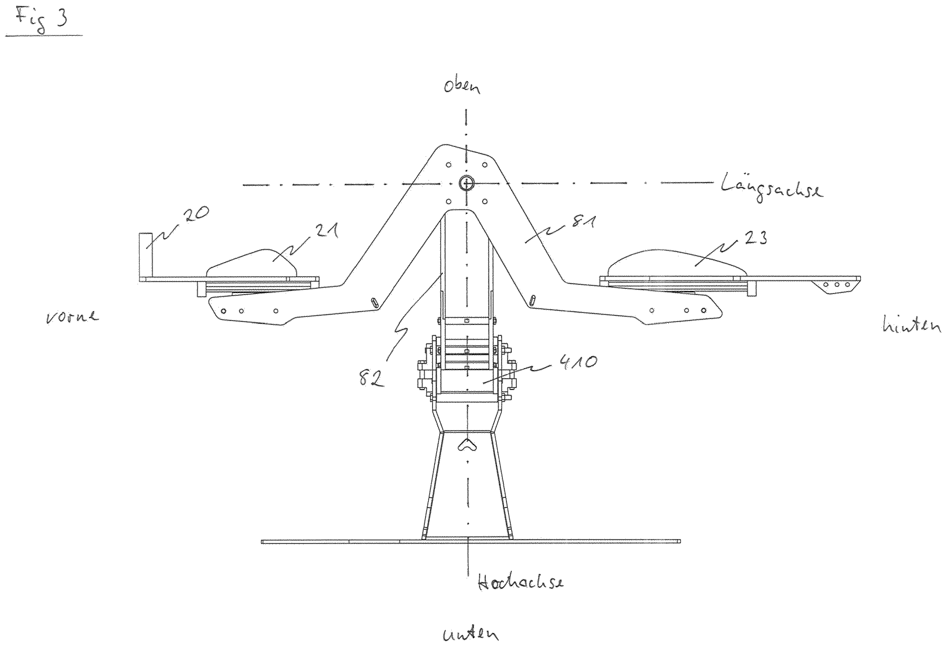

Fig. 3 zeigt eine Seitenansicht des ersten Ausführungsbeispiels des Geräts 1, wobei die Längsachse des Geräts in horizontaler Richtung verläuft, und die Hochachse in vertikaler Richtung. Wenn das Rahmenelement 81 um die Querachse des Geräts kippt, wobei die Querachse in Richtung der Zeichnungsebene verläuft, also aus der Zeichnungsebene heraustritt, kippt die Auflagevorrichtung 2, welche unter anderem die Armschalen 21, die Griffelemente 20 und die Beinschalen 23 aufweist, ebenfalls um die Querachse des Geräts.

Fig. 4 zeigt eine Draufsicht des ersten Ausführungsbeispiels des Gerät 1, wobei in der Abbildung die Querachse des Geräts vertikal und die Längsachse des Geräts horizontal verläuft, wobei auf der rechten Seite der Abbildung der hintere Bereich des Geräts 1 angeordnet ist, auf der linken Seite der Abbildung der vordere Bereich des Geräts 1, am oberen Rand der Abbildung der rechte Bereich des Geräts 1 und am unteren Rand der Abbildung der linke Bereich des Geräts 1. Des Weiteren sind die Beinauflagen 23, die Fußstreben 24, die Armschalen 21 sowie die Griffelemente 20 zu erkennen.

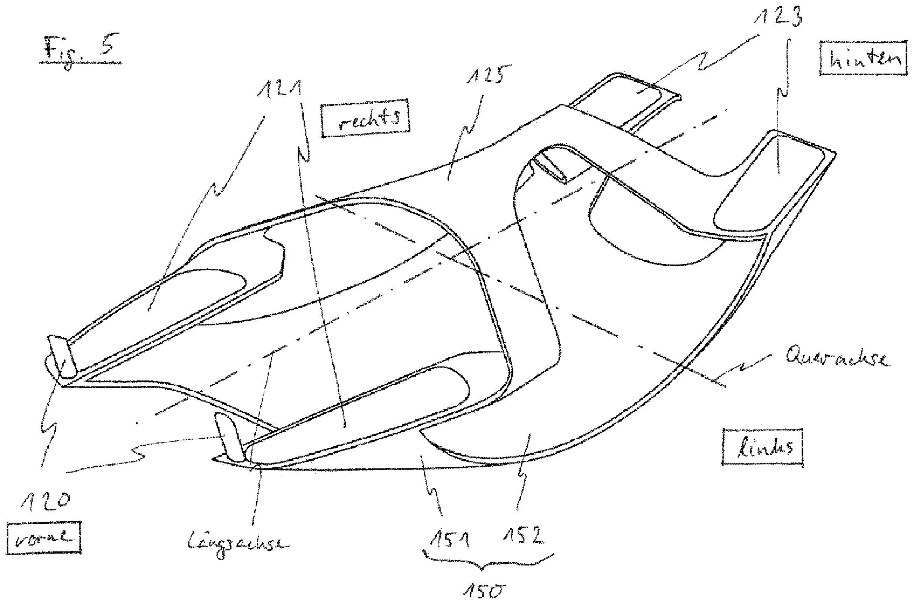

Fig. 5 zeigt eine perspektivische Ansicht eines zweiten Ausführungsbeispiels des Geräts 1 zum Ausführen von Bewegungen durch Schwerpunktverlagerung und/oder Muskelbetätigung eines menschlichen Körpers. Dieses zweite Ausführungsbeispiel 100 unterscheidet sich vom ersten Ausführungsbeispiel 1 dadurch, dass es sich um eine "Starterversion" bzw. "Low-Cost-Variante" des Geräts 1 handelt. Das Gerät 100 verzichtet im Vergleich zum Gerät 1 auf eine Aufteilung der Baugruppe in einen beweglichen Teil und in einen starren Teil. Vielmehr ist das Gerät 100 einteilig ausgeführt, wobei das Gerät 100 einen Basisabschnitt 150 mit einer nach außen zeigenden konvexen Fläche 151 und eine nach innen zeigende konkave Fläche 152 aufweist. Im linken Bereich der Fig. 5, also im vorderen Bereich des Geräts 100, sind Griffelemente 120 zum Umgreifen mit den Händen vorgesehen. Des Weiteren weist das Gerät 100, oberhalb des Basisabschnitts 150, zwei Armauflagen 121 auf, die im vorderen Bereich des Geräts 100 angeordnet sind, sowie zwei Beinauflagen 123 auf, die im hinteren Bereich des Geräts 100 angeordnet sind. Die Armauflagen 121, sowie die Beinauflagen 123, sind mittels eines Versteifungselements 125 verbunden. Durch das Versteifungselement 125 wird die schalenartige Gestalt des Geräts 100 im oberen Bereich zumindest teilweise geschlossen, wodurch ein "geschlossenes Profil" entsteht, das dem Gerät 100 eine hohe Steifigkeit verleiht, trotz Leichtbauweise. Das Versteifungselement 125 ist über den Armauflagen 121 und über den Beinauflagen 123 angeordnet. Ein Benutzer des Geräts 100 bewegt seinen Körper zwar frei über dem Versteifungselement 125, allerdings kann er seinen Körper zu Ruhezwecken oder zum Steuern von weiteren Funktionen zumindest zeitweise auf dem Versteifungselement 125 ablegen. Das gesamte Gerät 100 ist zudem einstückig aufgebaut, wobei die einzelnen Elemente ohne Bauteiltrennung ineinander übergehen. In einem weiteren, nicht gezeigten Ausführungsbeispiel ist das Gerät 100 aus mehreren Teilen hergestellt, wobei die Einzelteile erst nach der Herstellung oder nach dem Verkauf an den (End)Kunden zusammengefügt und/oder zusammengebaut werden.

Des Weiteren ist in der Darstellung der Fig. 5 eine Längsachse, sowie eine Querachse eingezeichnet. Wenn das Gerät 100 mit seiner konvexen Fläche 151 auf dem Boden aufliegt, ist das Gerät 100 mittels einer Abrollbewegung auf dem Boden um seine Längsachse und um seine Querachse kippbar. Die Lage dieser Achsen ergibt sich anhand der Krümmung des Teils der konvexen Fläche 151, der gerade mit dem Boden in Kontakt steht. Wenn die Krümmung der konvexen Fläche 151 variabel ist, verschieben sich die Achsen während einer Abrollbewegung des Geräts 100. Die Querachse des Geräts 100 wird demzufolge genau durch die Drehachse definiert, um welche sich das Gerät 100 bei einem Kippen nach vorne oder hinten dreht (die Definitionen vorne, hinten, links, rechts ergeben sich durch die entsprechenden Beschriftungen in Fig. 5). Falls die Krümmung der konvexen Fläche 151 beim nach vorne/hinten Kippen in ihrem Kontaktpunkt mit dem Boden variiert, verschiebt sich demzufolge die Drehachse des Geräts 100, welche die Querachse definiert. Gleiches gilt für die Lage der Längsachse bei einem Verkippen nach links/rechts.

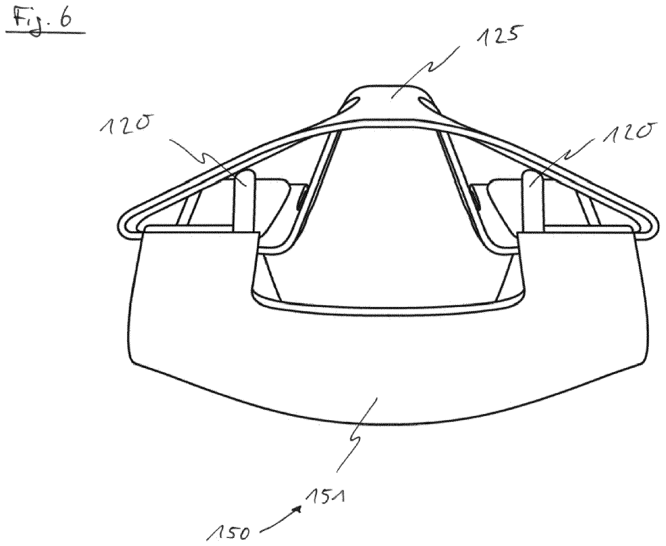

Fig. 6 zeigt eine Vorderansicht des zweiten Ausführungsbeispiels des Geräts 100. In dieser Ansicht ist gut zu erkennen, dass der Basisabschnitt 150 im unteren Bereich, und das Versteifungselement 125 im oberen Bereich des Geräts 100 angeordnet ist. Des Weiteren kann anhand der untersten Linie in der Fig. 6 die Krümmung der konvexen Fläche 151 erkannt werden. Im mittigen Bereich ist diese Linie stärker gekrümmt, als im äußeren Bereich des Fig. 6. Diese Krümmung wird bei einem Verkippen des Geräts um dessen Längsachse wirksam. Es gilt zu beachten, dass die in Fig. 6 zu erkennende Krümmung lediglich aus einer Projektion der Körperkante der konvexen Fläche 151 in die Bildebene entsteht. Resultierend daraus kann sich die Krümmung dieser projizierten Linie ändern, falls das Gerät 100 nach vorne bzw. nach hinten kippt (Verkippen um die Querachse), da dann ein anderer Teil der konvexen Fläche 151 als Körperkante zu erkennen ist.

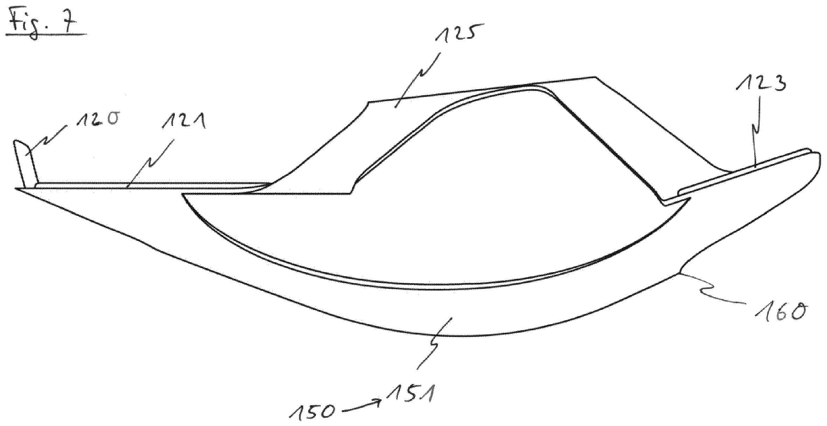

Fig. 7 zeigt eine Seitenansicht des zweiten Ausführungsbeispiels des Geräts 100. Im linken Bereich der Fig. 7 ist ein erstes Griffelement 120 zum Umgreifen mit der linken Hand zu erkennen, wobei das zweite Griffelement 120 zum Umgreifen mit der rechten Hand verdeckt wird, welches aber in den Figs. 5, 6 und 8 zu sehen ist. Ebenfalls im linken Bereich der Fig. 7 ist eine Armauflage 121 zu erkennen. Im rechten Bereich der Fig. 7 ist eine Beinauflage 123 dargestellt. Im oberen Bereich der Fig. 7 ist das Versteifungselement 125 zu erkennen, und im unteren Bereich ist die konvexe Fläche 151 des Basisabschnitts 150 dargestellt. Die konvexe Fläche 151 weist im hinteren Bereich des Geräts 100, also im rechten Bereich der Fig. 7, eine in der Zeichnungsebene verlaufende Kante 160 auf. Diese Kante 160 dient als Anschlag für eine Kippbewegung des Geräts 100 nach hinten, bzw. als Drehpunktauflage beim Kippen des Geräts 100 nach hinten, falls ein Verkippen über den Anschlag hinaus ausgeführt wird.

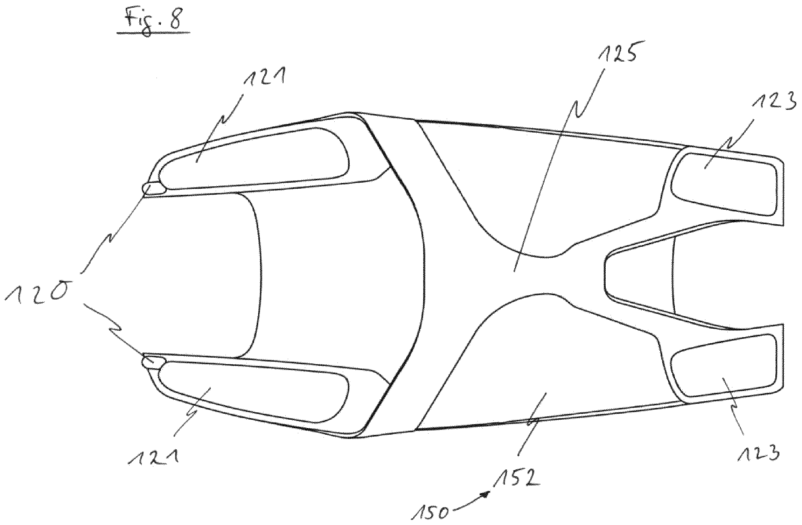

Fig. 8 zeigt eine Draufsicht des zweiten Ausführungsbeispiels des Geräts 100.

Es ist ein Aspekt der Offenbarung, ein Gerät zum Ausführen von Bewegungen durch Schwerpunktverlagerung und/oder Muskelbetätigung eines menschlichen Körpers vorzusehen, aufweisend:
eine Auflagevorrichtung zum Stützen von Körperteilen, wobei der Hüftbereich des Körpers frei bewegbar ist,
eine Basis zum Abstützen von Kräften am Boden und/oder an einer Wand,
eine Kinematikvorrichtung zum Verbinden von Auflagevorrichtung und Basis, wobei die Kinematikvorrichtung dazu angepasst ist, eine Bewegung des Körpers um eine virtuelle Längsachse und um eine virtuelle Querachse zu ermöglichen.

Es ist ein weiterer Aspekt der Offenbarung, ein Gerät zum Ausführen von Bewegungen durch Schwerpunktverlagerung und/oder Muskelbetätigung eines menschlichen Körpers vorzusehen,
wobei die Auflagevorrichtung 2 den Körper ausschließlich an seinen Extremitäten abstützt.

Es ist ein weiterer Aspekt der Offenbarung, ein Gerät zum Ausführen von Bewegungen durch Schwerpunktverlagerung und/oder Muskelbetätigung eines menschlichen Körpers vorzusehen,
wobei Längsachse und Querachse einen Schnittpunkt bilden.

Es ist ein weiterer Aspekt der Offenbarung, ein Gerät zum Ausführen von Bewegungen durch Schwerpunktverlagerung und/oder Muskelbetätigung eines menschlichen Körpers vorzusehen,
wobei der gemeinsame Schwerpunkt von Körper und dem beweglichen Teil des Geräts 1 in einem Ruhezustand im oder unter dem Schnittpunkt von Längs- und Querachse liegt.

Es ist ein weiterer Aspekt der Offenbarung, ein Gerät zum Ausführen von Bewegungen durch Schwerpunktverlagerung und/oder Muskelbetätigung eines menschlichen Körpers vorzusehen,
wobei die Basis 3 eine im Wesentlichen vertikale Hochachse aufweist,
wobei die Hochachse eine Kontaktebene schneidet, welche das Gerät 1 in einen oberen und in einen unteren Teil aufteilt,
wobei der obere Teil des Geräts 1 gegenüber dem unteren Teil um die Hochachse verdrehbar ist,
wobei die Hochachse zur Normalen der Kontaktebene nicht identisch ist,
wobei resultierend aus einem Verdrehen der Gesamtschwerpunkt des Geräts 1 zum Erzeugen eines Rückstellmoments anhebbar ist.

Es ist ein weiterer Aspekt der Offenbarung, ein Gerät zum Ausführen von Bewegungen durch Schwerpunktverlagerung und/oder Muskelbetätigung eines menschlichen Körpers vorzusehen,
wobei zwischen oberem und unterem Teil des Geräts 1 ein Dämpfungselement vorgesehen ist.

Es ist ein weiterer Aspekt der Offenbarung, ein Gerät zum Ausführen von Bewegungen durch Schwerpunktverlagerung und/oder Muskelbetätigung eines menschlichen Körpers vorzusehen,
wobei alle Elemente der Auflagevorrichtung 2 relativ zueinander nicht beweglich sind.

Es ist ein weiterer Aspekt der Offenbarung, ein Gerät zum Ausführen von Bewegungen durch Schwerpunktverlagerung und/oder Muskelbetätigung eines menschlichen Körpers vorzusehen,
wobei die Auflagevorrichtung 2 zum Stützen der Körperteile aufweist:
   zwei Armschalen 21 zum jeweiligen Abstützen eines Unterarms des Körpers, sowie
   zwei Beinschalen 23 zum jeweiligen Abstützen eines Unterschenkels des Körpers.

Es ist ein weiterer Aspekt der Offenbarung, ein Gerät zum Ausführen von Bewegungen durch Schwerpunktverlagerung und/oder Muskelbetätigung eines menschlichen Körpers vorzusehen,
wobei die Auflagevorrichtung 2 zum Stützen der Körperteile zwei Strebenelemente 24 zum jeweiligen Abstützen einer Fußsohle aufweist.

Es ist ein weiterer Aspekt der Offenbarung, ein Gerät zum Ausführen von Bewegungen durch Schwerpunktverlagerung und/oder Muskelbetätigung eines menschlichen Körpers vorzusehen,
wobei die Auflagevorrichtung 2 zum Stützen der Körperteile zwei Griffelemente 20 zum jeweiligen Umgreifen mit einer Hand aufweist.

Es ist ein weiterer Aspekt der Offenbarung, ein Gerät zum Ausführen von Bewegungen durch Schwerpunktverlagerung und/oder Muskelbetätigung eines menschlichen Körpers vorzusehen,
wobei jedes Griffelement 20 mit der dazugehörigen Armschale 21 als Einheit 22 ausgebildet ist,
wobei jede Einheit 22 aus Armschale 21 und Griffelement 20 unabhängig von der anderen Einheit 22 verschiebbar ist.

Es ist ein weiterer Aspekt der Offenbarung, ein Gerät zum Ausführen von Bewegungen durch Schwerpunktverlagerung und/oder Muskelbetätigung eines menschlichen Körpers vorzusehen,
eine Positionserfassungsvorrichtung zum Erfassen der aktuellen Position jedes beweglichen Teils der Vorrichtung, sowie eine Übertragungsvorrichtung zum Übertragen der Positionsdaten zur Weiterverarbeitung an eine Recheneinheit.

Es ist ein weiterer Aspekt der Offenbarung, ein Gerät zum Ausführen von Bewegungen durch Schwerpunktverlagerung und/oder Muskelbetätigung eines menschlichen Körpers vorzusehen, wenigstens einen Motor und/oder wenigstens ein Dämpfungselement,
wodurch die Bewegung der beweglichen Elemente des Geräts 1 beeinflusst werden kann,
wobei das Dämpfungselement dazu angepasst ist, einer Bewegung entgegenzuwirken,
wobei der Motor dazu angepasst ist, einer Bewegung entgegenzuwirken und/oder eine Bewegung zu unterstützen.

Es ist ein weiterer Aspekt der Offenbarung, ein Gerät zum Ausführen von Bewegungen durch Schwerpunktverlagerung und/oder Muskelbetätigung eines menschlichen Körpers vorzusehen,
wobei die einzelnen den Körper stützenden Elemente der Auflagevorrichtung 2 relativ zueinander bewegbar sind.

Es ist ein weiterer Aspekt der Offenbarung, ein Gerät zum Ausführen von Bewegungen durch Schwerpunktverlagerung und/oder Muskelbetätigung eines menschlichen Körpers vorzusehen,
Anschläge zum Begrenzen der Bewegungsmöglichkeit der beweglichen Teile des Geräts,
wobei die Freiheitsgrade der Bewegungsmöglichkeit und die Anschläge beliebig anpassbar sind.

Es ist ein weiterer Aspekt der Offenbarung, ein Gerät zum Ausführen von Bewegungen durch Schwerpunktverlagerung und/oder Muskelbetätigung eines menschlichen Körpers vorzusehen,
wobei die Kinematikvorrichtung ein Tragelement 82 in der Gestalt eines geschlossenen Kreises oder zumindest eines Kreisbogensegments aufweist, wobei das Tragelement 82 dazu angepasst ist, dem menschlichen Körper ein Rotieren um die Längsachse des Geräts zu ermöglichen.

Es ist ein weiterer Aspekt der Offenbarung, ein Verfahren zum Ausführen von Bewegungen mit einem Gerät gemäß einem der vorhergehenden Aspekte vorzusehen,
wobei die Auflagevorrichtung 2 zusammen mit den sich darauf abstützenden Körperteilen durch ein Verschieben des Körperschwerpunkts um Querachse und Längsachse bewegt wird.

Es ist ein weiterer Aspekt der Offenbarung, ein Verfahren zum Ausführen von Bewegungen mit einem Gerät vorzusehen,
wobei durch ein Verschieben der Einheiten 22 aus Armschale 21 und Griffelement 20 ein Steuersignal generierbar ist.

Es ist ein weiterer Aspekt der Offenbarung, ein Verfahren zum Ausführen von Bewegungen mit einem Gerät vorzusehen, mit den Schritten:
Aufbringen eines Drehmoments um die Hochachse des Geräts 1 durch einen Benutzer, wodurch ein Verdrehen des oberen Teils des Geräts 1 gegenüber dem unteren Teil des Geräts 1 verursacht wird,
Verlagern des Gesamtschwerpunkts des Geräts in vertikaler Richtung nach oben,
Generieren eines Rückstellmoments durch das Anheben des Gesamtschwerpunkts nach oben, Aufheben der Verdrehung durch Verlagern des Gesamtschwerpunkts in die Ausgangslage in vertikaler Richtung nach unten, verursacht durch Schwerkraft.

Es ist ein weiterer Aspekt der Offenbarung, ein System aus einem Gerät zum Ausführen von Bewegungen durch Schwerpunktverlagerung und/oder Muskelbetätigung eines menschlichen Körpers vorzusehen, und einer visuellen Ausgabevorrichtung.

Es ist ein weiterer Aspekt der Offenbarung, ein System vorzusehen,
wobei die visuelle Ausgabevorrichtung eine auf dem Kopf des menschlichen Körpers getragene Videobrille ist.

Es ist ein weiterer Aspekt der Offenbarung, ein System vorzusehen,
wobei die Position des Kopfes und der darauf getragenen Videobrille sowie die Position der beweglichen Teile des Geräts 1 zum Ausführen von Bewegungen durch Schwerpunktverlagerung und/oder Muskelbetätigung eines menschlichen Körpers unabhängig voneinander erfasst und weiterverarbeitet werden.

Es ist ein weiterer Aspekt der Offenbarung, ein System vorzusehen,
wobei der Benutzer auf dem Gerät wenigstens teilweise von der visuellen Ausgabevorrichtung umschlossen wird.

Es ist ein weiterer Aspekt der Offenbarung, ein System vorzusehen,
wobei die visuelle Ausgabevorrichtung dazu angepasst ist, stehende und/oder bewegte Bilder auszugeben.

Es ist ein weiterer Aspekt der Offenbarung, ein System vorzusehen,
wobei die visuelle Ausgabevorrichtung dazu angepasst ist, dreidimensionale Bilder auszugeben.

Durch die freie Bewegbarkeit des Hüftbereiches eines Anwenders kann gewährleistet werden, dass dieser seinen Schwerpunkt bzw. den Gesamtschwerpunkt des beweglichen Teils des Gerätes sowie seines eigenen Körpers so verlagern kann, dass diese Schwerpunktsverlagerung zu einer Bewegung des Gerätes aufgrund von Schwerkraft führt, wodurch ein besonders angenehmes Benutzungsverhalten resultiert. Denn die Vorrichtung reagiert dadurch besonders schnell auf Wünsche zur Bewegungsänderung, und nach einer kurzen Eingewöhnungszeit ist es einem Benutzer möglich, das Gerät intuitiv und dosiert zu bedienen bzw. zu bewegen.

Eine Bewegung von Benutzer und beweglichen Teilen des Gerätes ist um zwei virtuelle Achsen möglich, eine Längsachse und eine Querachse. Diese bilden vorteilhafterweise einen Schnittpunkt, wodurch es dem Benutzer ermöglicht wird, eine Bewegung um die Längsachse und eine Bewegung um die Querachse mit identischem Kraftaufwand auslösen zu können.

Vorteilhafterweise liegt der gemeinsame Schwerpunkt von dem Körper des Benutzers und den beweglichen Teilen des Gerätes knapp unter dem Schnittpunkt von Längs- und Querachse. Dadurch befindet sich das bewegliche System in einem stabilen Zustand. Dass der Schwerpunkt unterhalb des Schnittpunktes von Längs- und Querachse angeordnet ist, bedeutet, dass der Schwerpunkt in vertikaler Richtung unter dem Schnittpunkt der Achsen liegt. Vorteilhafterweise ist es dem Benutzer möglich, seinen Körperschwerpunkt durch eine Bewegung des Hüftbereichs so anzuordnen, dass daraus eine Auslenkung des beweglichen Teils der Vorrichtung resultiert bzw. verursacht wird. Außerdem entsteht für den Benutzer aufgrund der freien Beweglichkeit seines Hüftbereichs bzw. seines Körperschwerpunkts der Eindruck, als würde er schweben.

Vorteilhafterweise ist das Gerät gemäß der ersten Ausführungsform in einen oberen und einen unteren Teil getrennt (in vertikaler Richtung oben bzw. unten), wobei die Trenn- bzw. Kontaktebene in dem Bereich der Basis liegen kann. In dieser Ebene liegen jeweils eine ebene Fläche des oberen und des unteren Teils flanschartig aneinander an. Die Kontaktebene wird durch einen Bolzen geschnitten, welcher in den oberen sowie in den unteren Teil des Gerätes eingeführt ist. Die axiale Richtung des Bolzens stimmt nicht mit der Normalenrichtung der Kontaktebene überein. Aufgrund der daraus resultierenden Kinematik hebt sich die Geometrie der oberen Kontaktfläche von der Geometrie der unteren Kontaktfläche ab (und umgekehrt), wenn eine Verdrehung zwischen oberem und unterem Geräteteil ausgelöst wird. Ein gegenseitiges Abheben kann dadurch ausgelöst werden, dass sich eine Umfangskante der einen Kontaktfläche zumindest teilweise in die andere Kontaktfläche hineindreht bzw. in diese zwangsweise hinein geschwenkt wird und dadurch zwangsweise entlang des Bolzens nach oben bewegt wird. Des Weiteren kann die axiale Richtung des Bolzens vertikal sein. Wenn nun ein Benutzer des Gerätes eine ruckartige Bewegung ausführt, aus der ein Drehmoment um die Hochachse des Gerätes resultiert, würde dieses Drehmoment bei einer einteiligen Geräteausführung zu einem Rucken bzw. Wackeln des gesamten Gerätes führen. Durch eine Zweiteilung mit der beschriebenen Kinematik allerdings führt ein Drehmoment um die Hochachse des Gerätes zu einer Verdrehung zwischen oberem und unterem Teil des Geräts, wobei sich während des Verdrehens der obere und der untere Teil voneinander abheben, da die Außenumfangskante des oberen Teils am unteren Teil entlang geführt wird (oder umgekehrt) und in Abhängigkeit der Winkellage des Bolzens relativ zur Normalen der beiden Kontaktebenen mehr oder weniger stark eine Bewegungskurve vollzieht. Dadurch wird der Schwerpunkt des oberen Teils des Geräts angehoben. Durch die Anhebung des Schwerpunkts bewirkt die Gewichtskraft des oberen Teils der Vorrichtung ein Rückstellmoment, wodurch sich das Gerät wieder zurück in seine Ausgangslage bewegt. Dadurch können ruckartige Bewegungen eines Benutzers auf der Vorrichtung abgefedert bzw. gedämpft und stabilisiert werden.

Zwischen den oben beschriebenen Kontaktflächen des oberen und unteren Teils des Gerätes kann vorteilhafterweise ein Dämpfungselement vorgesehen sein, beispielsweise aus einem gummiartigen Material, welches eine zusätzliche dämpfende Wirkung aufbringt. Dieses Dämpfungselement könnte kreisförmig ausgeführt sein und zwischen die Kontaktflächen eingelegt werden. Des Weiteren kann es eine Durchgangsbohrung zur Aufnahme des Bolzens aufweisen.

Bei der ersten Ausführungsform können alle Elemente der Auflagevorrichtung, also die Schalen zur Aufnahme von Unterarmen und Unterschenkeln, sowie die Strebenelemente und Griffstücke relativ zueinander starr vorgesehen sein. Durch eine solche Anordnung ist es für einen Benutzer besonders einfach und präzise möglich, seinen Schwerpunkt so zu verlagern, wie es für eine aktuelle Anwendung möglich ist.

In vorteilhafter Weise weist die Auflagevorrichtung zum Stützen der Körperteile zwei Armschalen auf, welche jeweils einen Unterarm des Körpers abstützen, sowie zwei Beinschalen zum jeweiligen Abstützen eines Unterschenkels des Körpers. Durch solch eine Anordnung ist es dem Benutzer möglich, seinen Hüftbereich frei zu bewegen, um möglichst einfach eine Schwerpunktverlagerung ausführen zu können.

Vorteilhafterweise weist die Auflagevorrichtung zum Stützen der Körperteile außerdem zwei Strebenelemente auf, zum jeweiligen Abstützen einer Fußsohle. Diese Streben sind in besonderer Weise dazu geeignet, den menschlichen Körper in seiner Längsrichtung in der Lage zu sichern. Des Weiteren erleichtern die Fußstützen ein Aufsteigen auf die Vorrichtung. Idealerweise wird das Gerät, bevor es bestiegen wird, so in Position gebracht, dass die Fußstreben selbst oder ein Bereich um diese herum Bodenkontakt bekommen. Dadurch wird der bewegliche Teil des Geräts stabilisiert und kann von einem Benutzer einfach und sicher bestiegen werden.

Vorteilhafterweise weist die Auflagevorrichtung zum Stützen der Körperteile außerdem zwei Griffelemente auf, welche jeweils von einer Hand des Benutzers umgriffen werden können, so dass sich der Benutzer einfach in seiner Lage sichern bzw. festhalten kann. Der Benutzer kann sich durch die Abstützmöglichkeiten zwischen Fußstreben und Griffelementen in das Gerät hineinstemmen und seinen Körperschwerpunkt somit besonders einfach und definiert verlagern.

Des Weiteren kann in einer bevorzugten Ausführungsform das Griffelement mit der jeweiligen dazugehörigen Armschale als Einheit ausgebildet sein. Zugehörig bedeutet, dass es sich um die Armschale handelt, welche dem Griffelement am nächsten ist. Des Weiteren kann jede Einheit aus Armschale und Griffelement unabhängig von der anderen Einheit verschiebbar vorgesehen sein. Eine solche Verschiebung kann dadurch ermöglicht werden, dass die Einheiten aus Armschale und Griffelement auf einem Schienensystem geführt werden, welches sich zwischen beweglichem Teil des Geräts und der Einheit aus Armschale und Griffelement befindet.

Vorteilhafterweise weist das Gerät eine Erfassungsvorrichtung zum Erfassen der aktuellen Position jedes beweglichen Teils des Gerätes auf, sowie eine Übertragungsvorrichtung zum Übertragen der Positionsdaten. Durch eine solche Ausführungsform ergeben sich vielfältige Anwendungsmöglichkeiten der Erfindung. Durch eine Erfassung der Positionsdaten ist es möglich, diese an eine Recheneinheit weiterzugeben, wodurch Anwendungen zur Simulation von virtuellen Realitäten realisiert werden können. Beispielsweise ist es dadurch möglich, in einem Computerspiel oder einer Simulatoranwendung die Bewegungen der beweglichen Teile des Gerätes zum Steuern von Funktionen zu verwenden. Zum Steuern eines Flugzeuges während einer Flugsimulatoranwendung wäre es beispielsweise denkbar, dass ein Benutzer des Gerätes durch Schwerpunktverlagerung sich selbst und die beweglichen Teile des Gerätes um eine Längsachse dreht, um dadurch das Flugzeug im Flugsimulator ebenfalls um seine Längsachse drehen zu lassen. Um das Flugzeug außerdem um seine Querachse zu steuern, könnte ein Benutzer sich selbst und den beweglichen Teil der Vorrichtung ebenfalls um eine Querachse drehen bzw. eine solche Drehung verursachen, idealerweise durch Verlagerung seines Körperschwerpunkts. Um das Seitenruder des Flugzeugs zu betätigen, also eine Drehung des Flugzeugs um die Hochachse auszulösen, wäre es denkbar, dass ein Benutzer gleichzeitig eine Einheit aus Armschale und Griffelement nach vorne bewegen muss, und eine andere nach hinten.

Des Weiteren ist es denkbar, dass das Gerät wenigstens einen Motor und/oder wenigstens ein Dämpfungselement aufweist, um auf die Bewegungen des Geräts bzw. der darauf befindlichen Person Einfluss nehmen zu können. Beispielsweise könnten aus einer Computeranwendung heraus Effekte generiert werden, welche zu einer Lageänderung des beweglichen Teils des Gerätes und somit auch des darauf befindlichen Benutzers führt. Bei der Bedienung eines Computerrennspiels beispielsweise könnte ein Benutzer während eines Beschleunigungsvorgangs nach hinten gekippt werden, während eines Bremsvorgangs nach vorne gekippt werden, und beim Durchfahren von Kurven zu der entsprechenden Seite gekippt werden. Beim Durchfahren einer Linkskurve könnte ein Verkippen der Vorrichtung zur gleichen Seite, also ebenfalls nach links ausgelöst werden, um beim Benutzer einen Effekt zu erzeugen, der einem "sich in die Kurve legen" entspricht. Allerdings wäre es auch denkbar, beim Durchfahren einer Linkskurve ein Verkippen des beweglichen Teils des Gerätes nach rechts auszulösen, um die Einwirkung von Fliehkraft auf den Benutzer zu simulieren. Es wäre ebenfalls denkbar, die Griffelemente beweglich auszuführen, und die aktuelle Position der Griffelemente durch einen Sensor zu erfassen und an die Recheneinheit weiterzugeben. Die Griffelemente könnten so ausgeführt werden, dass sich diese wie ein Gasgriff eines Motorrads drehen lassen. Eine solche Ausführung könnte Anwendung finden, falls ein Motorradrennen simuliert werden soll. Die Bewegungsmöglichkeit der Einheiten aus Armschale und Griffelement auf einem Schienensystem könnte des Weiteren dazu erfasst werden, um in einer Simulatoranwendung ein Beschleunigen oder Bremsen zu steuern, oder eine andere gewünschte Funktion.

Des Weiteren wäre es denkbar, dass die einzelnen Elemente zum Stützen der Körperextremitäten, die beispielsweise der Unterarme und Unterschenkel, zueinander bewegbar ausgeführt sind. Durch eine entsprechende mechanische Kinematik der Bewegungsmöglichkeiten dieser Elemente oder durch eine Beeinflussung der Bewegungsmöglichkeiten mittels Motoren oder Dämpfungselemente wäre es beispielsweise möglich, einen Benutzer in bestimmte Bewegungsabläufe zu zwingen oder ihm nur spezielle Bewegungsabläufe zu ermöglichen. Dabei wäre es denkbar, einem Benutzer während einer Schwimmsimulatoranwendung eine Bewegung zu ermöglichen, welche dem Kraulschwimmen entspricht. Des Weiteren wäre es möglich, die Bewegungen des Benutzers mittels Elektromotoren oder Dämpfungselementen zu erschweren. Dadurch ergeben sich weitere vielfältige Anwendungsmöglichkeiten des Geräts, wie beispielsweise der Einsatz als Sportsimulator, wobei der Benutzer während der Simulatoranwendung eine körperliche Betätigung ausführen muss, welche der körperlichen Betätigung bei der Ausübung der entsprechenden Sportart entspricht oder zumindest ähnelt. Während einer Schwimmsimulatoranwendung beispielsweise könnte mittels Motoren oder Dämpfungselementen der Wasserwiderstand simuliert werden, wie er auch beim tatsächlichen Schwimmen im Wasser auftreten würde und einer Bewegung des Schwimmers entgegenwirkt. Das Risiko des Ertrinkens, welchem ein Schwimmer permanent im Falle einer Ohnmacht oder Erschöpfung ausgesetzt ist, kann durch eine solche Schwimmsimulatoranwendung in erheblichem Maße reduziert werden. Trotzdem tritt der gewünschte Trainingseffekt ein. Auch das Risiko eines Absturzes für Piloten kann vermieden werden, wenn diese den Flugsport nur noch im Simulator ausüben, und nicht mehr im freien Luftraum.

## Patentansprüche

1. Gerät (100) zum Ausführen von Bewegungen durch Schwerpunktverlagerung und/oder Muskelbetätigung eines menschlichen Körpers, aufweisend:
eine Auflagevorrichtung zum Stützen von Körperteilen, wobei der Hüftbereich des Körpers frei bewegbar ist, und
einen Basisabschnitt (150) zum Abstützen von Kräften am Boden,
wobei der Basisabschnitt (150) und die Auflagevorrichtung miteinander verbunden sind,
wobei der Basisabschnitt (150) eine im Betrieb zum Boden zeigende konvexe Fläche (151) aufweist, wobei
der Basisabschnitt (150) dazu eingerichtet ist, eine Bewegung des Körpers und des Geräts (100) um eine virtuelle Längsachse und um eine virtuelle Querachse zu ermöglichen,
**dadurch gekennzeichnet, dass**
die Auflagevorrichtung zwei Armauflagen (121) und zwei Beinauflagen (123) aufweist,
die den Körper ausschließlich an seinen Extremitäten abstützen.

2. Gerät (100) gemäß Anspruch 1, wobei
die konvexe Fläche (151) dazu eingerichtet ist, mit dem Boden in Berührungskontakt zu stehen.

3. Gerät (100) gemäß einem der vorherigen Ansprüche, wobei
die Lage der Achsen von der Krümmung der konvexen Fläche (151) am Kontaktpunkt des Basisabschnitts (150) mit dem Boden abhängig ist,
wobei das Gerät (100) dazu eingerichtet ist, während des Bewegens in Rollkontakt mit dem Boden zu stehen.

4. Gerät (100) gemäß einem der vorhergehenden Ansprüche, wobei die Krümmung der konvexen Fläche (151) des Basisabschnitts (150) variabel ist.

5. Gerät (100) gemäß einem der vorhergehenden Ansprüche, wobei die Krümmung der konvexen Fläche (151) des Basisabschnitts (150) im Kontaktpunkt des Basisabschnitts (150) mit dem Boden während einer Ruheposition maximal ist.

6. Gerät (100) gemäß einem der vorhergehenden Ansprüche, das dazu eingerichtet ist, dass
der gemeinsame Schwerpunkt aus Gerät (100) und menschlichem Körper stets unterhalb von Längsachse und Querachse liegt.

7. Gerät (100) gemäß einem der vorhergehenden Ansprüche, des Weiteren aufweisend
ein Versteifungselement (125), welches das Gerät (100) als geschlossenes Profil ausbildet.

8. Gerät (100) gemäß einem der vorhergehenden Ansprüche, des Weiteren aufweisend
zwei Griffelemente (120) zum jeweiligen Umgreifen mit einer Hand.

9. Gerät (100) gemäß einem der vorhergehenden Ansprüche, wobei alle Teile des Geräts (100) bezüglich einander nicht bewegbar sind.

10. Gerät (100) gemäß einem der vorhergehenden Ansprüche, bestehend aus Kunststoff.

11. Gerät (100) gemäß einem der vorhergehenden Ansprüche, wobei das Gerät (100) dazu eingerichtet ist, kostengünstig im Spritzgussverfahren herstellbar zu sein.

12. Verfahren zum Ausführen von Bewegungen mit einem Gerät (100) gemäß einem der Ansprüche 1 bis 11,
wobei das Gerät (100) zusammen mit den sich darauf abstützenden Körperteilen durch ein Verschieben des Körperschwerpunkts um Querachse und Längsachse bewegt wird.

13. System aus einem Gerät (100) gemäß einem der Ansprüche 1 bis 11 und einer visuellen Ausgabevorrichtung.

14. System gemäß dem vorherigen Anspruch,
wobei die visuelle Ausgabevorrichtung eine auf dem Kopf des menschlichen Körpers getragene Videobrille ist.

15. System gemäß dem vorherigen Anspruch, das dazu angepasst ist, die Position des Kopfes und der darauf getragenen Videobrille sowie die Position des Geräts (100) zum Ausführen von Bewegungen durch Schwerpunktverlagerung und/oder Muskelbetätigung eines menschlichen Körpers unabhängig voneinander zu erfassen und weiterzuverarbeiten.

16. System gemäß Anspruch 13,
wobei die visuelle Ausgabevorrichtung dazu angepasst ist, das Gerät (100) und den Benutzer auf dem Gerät (100) wenigstens teilweise zu umschließen.

17. System gemäß einem der vorherigen Ansprüche 13 bis 16,
wobei die visuelle Ausgabevorrichtung dazu angepasst ist, stehende und/oder bewegte Bilder auszugeben.

18. System gemäß einem der vorherigen Ansprüche 13 bis 17,
wobei die visuelle Ausgabevorrichtung dazu angepasst ist, dreidimensionale Bilder auszugeben.

## Claims

1. Device (100) for carrying out movements by shifting the centre of gravity and/or actuating muscles of a human body, said device comprising:
a supporting means for supporting body parts, wherein the waist region of the body is freely movable, and
a base portion (150) for supporting forces on the ground,
wherein the base portion (150) and the supporting means are joined together,
wherein the base portion (150) comprises a convex surface (151) which is directed to the ground during operating, wherein
the base portion (150) in adapted to enable a movement of the body and the device (100) about a virtual longitudinal axis and about a virtual lateral axis,
**characterized in that**
the supporting means comprises two arm supports (121) and two leg supports (123),
supporting the body exclusively at the body's extremities.

2. Device (100) according to claim 1, wherein
the convex surface (151) is adapted to be in contact with the ground.

3. Device (100) according to one of the preceding claims, wherein the position of the axes depend on the curvature of the convex surface (151) at the contact point of the base portion (150) with the ground,
wherein the device (100) is adapted to be in rolling contact with the ground during moving.

4. Device (100) according to one of the preceding claims, wherein the curvature of the convex surface (151) of the base portion (150) is variable.

5. Device (100) according to one of the preceding claims, wherein the curvature of the convex surface (151) of the base portion (150) in the contact point of the base portion (150) with the ground is a maximum value in a resting position.

6. Device (100) according to one of the preceding claims, wherein the common center of gravity of the device (100) and the human body is always below the longitudinal axis and the lateral axis.

7. Device (100) according to one of the preceding claims, further comprising
a stiffening element (125) forming the device (100) as a closed profile.

8. Device (100) according to one of the preceding claims, further comprising
two handle elements (120) each for being gripped by a hand.

9. Device (100) according to one of the preceding claims, wherein all parts of the device (100) are immovable with respect to each other.

10. Device (100) according to one of the preceding claims, consisting of plastic.

11. Device (100) according to one of the preceding claims, wherein the device (100) is manufactured via injection molding at low-cost.

12. Method for carrying out movements with a device (100) according to one of the claims 1 to 11,
wherein said device (100) is moved, together with the body parts supported thereon, about the lateral axis and the longitudinal axis by a shift of the centre of gravity of the body.

13. System comprising a device (100) according to one of claims 1 to 11 and a visual output apparatus.

14. The system according to the preceding claim,
wherein said visual output apparatus comprises video goggles worn on the head of the human body.

15. System according to the preceding claim,
wherein the position of the head and said video goggles worn thereon as well as the position of said device (100) for carrying out movements by shifting the centre of gravity and/or actuating muscles of a human body are independently detected and further processed.

16. System of claim 13,
wherein the device (100) and the user on said device (100) are at least partially surrounded by said visual output apparatus.

17. System according to one of the preceding claims 13 to 16,
wherein said visual output apparatus is adapted to output still and/or moving images.

18. The system according to one of the preceding claims 13 to 17,
wherein said visual output apparatus is adapted to output three-dimensional images.

## Revendications

1. Appareil (100) servant à exécuter des mouvements par le déplacement du point de gravité et/ou par une activité musculaire d'un corps humain, présentant :
un dispositif de réception servant à soutenir des parties du corps, dans lequel la région des hanches du corps peut effectuer des mouvements librement, et
une section de base (150) servant à supporter des forces au niveau du sol,
dans lequel la section de base (150) et le dispositif de réception sont reliés l'un à l'autre,
dans lequel la section de base (150) présente une surface (151) convexe pointant en fonctionnement vers le sol, dans lequel
la section de base (150) est mise au point pour permettre un mouvement du corps et de l'appareil (100) autour d'un axe longitudinal virtuel et autour d'un axe transversal virtuel,
**caractérisé en ce que**
le dispositif de réception présente deux accoudoirs (121) et deux repose-pieds (123),
qui soutiennent le corps exclusivement au niveau de ses extrémités.

2. Appareil (100) selon la revendication 1, dans lequel
la surface (151) convexe est mise au point pour être en contact avec le sol.

3. Appareil (100) selon l'une quelconque des revendications précédentes, dans lequel
la position des axes dépend de la courbure de la surface (151) convexe au niveau du point de contact de la section de base (150) avec le sol,
dans lequel l'appareil (100) est mis au point pour être en contact de roulement avec le sol au cours du mouvement.

4. Appareil (100) selon l'une quelconque des revendications précédentes, dans lequel la courbure de la surface (151) convexe de la section de base (150) est variable.

5. Appareil (100) selon l'une quelconque des revendications précédentes, dans lequel la courbure de la surface (151) convexe de la section de base (150) est maximale dans le point de contact de la section de base (150) avec le sol au cours d'une position de repos.

6. Appareil (100) selon l'une quelconque des revendications précédentes, qui est mis au point afin que
le point de gravité commun issu de l'appareil (100) et du corps humain se trouve systématiquement sous l'axe longitudinal et l'axe transversal.

7. Appareil (100) selon l'une quelconque des revendications précédentes, présentant par ailleurs
un élément de renforcement (125), qui réalise l'appareil (100) en tant que profil fermé.

8. Appareil (100) selon l'une quelconque des revendications précédentes, présentant en outre
deux éléments de poignée (120) destinés à être saisis respectivement par une main.

9. Appareil (100) selon l'une quelconque des revendications précédentes, dans lequel toutes les parties de l'appareil (100) ne peuvent pas effectuer des mouvements les uns par rapport aux autres.

10. Appareil (100) selon l'une quelconque des revendications précédentes, constitué de plastique.

11. Appareil (100) selon l'une quelconque des revendications précédentes, dans lequel l'appareil (100) est mis au point afin de pouvoir être fabriqué à moindres coûts lors du procédé de moulage par injection.

12. Procédé servant à exécuter des mouvements avec un appareil (100) selon l'une quelconque des revendications 1 à 11,
dans lequel l'appareil (100) effectue un mouvement, conjointement avec les parties de corps soutenues sur ce dernier, par un coulissement du point de gravité du corps autour de l'axe transversal et de l'axe longitudinal.

13. Système composé d'un appareil (100) selon l'une quelconque des revendications 1 à 11 et d'un dispositif d'émission visuel.

14. Système selon la revendication précédente,
dans lequel le dispositif d'émission visuel est des lunettes vidéo portées sur la tête d'un corps humain.

15. Système selon la revendication précédente, qui est adapté pour détecter et traiter ultérieurement la position de la tête et des lunettes vidéo portées sur cette dernière ainsi que la position de l'appareil (100) servant à exécuter des mouvements par déplacement du point de gravité et/ou par une activité musculaire d'un corps humain indépendamment l'une de l'autre.

16. Système selon la revendication 13,
dans lequel le dispositif d'émission visuel est adapté pour enfermer au moins en partie l'appareil (100) et l'utilisateur sur l'appareil (100).

17. Système selon l'une quelconque des revendications précédentes 13 à 16,
dans lequel le dispositif d'émission visuel est adapté pour émettre des images fixes et/ou des images en mouvement.

18. Système selon l'une quelconque des revendications 13 à 17,
dans lequel le dispositif d'émission visuel est adapté pour émettre des images tridimensionnelles.
